# EUROPÄISCHE PATENTSCHRIFT

(11) **EP 0 503 576 B1**
(45) Veröffentlichungstag und Bekanntmachung des Hinweises auf die Patenterteilung: **03.12.1997**
(21) Anmeldenummer: 92104116.6
(22) Anmeldetag: 11.03.1992
(51) Int. Cl.: G01F 23/28, B07C 5/34

(54) **Verfahren und Vorrichtung zur Messung des Flaschenfüllstandes**
Method and device for measuring the filling level in bottles
Procédé et dispositif pour la mesure du niveau des contenants de bouteille

(30) Priorität: 15.03.1991 DE 4108368
(43) Veröffentlichungstag der Anmeldung: 16.09.1992
(73) Patentinhaber: Heiden, Andreas, 50737 Köln (DE)
(72) Erfinder: Heiden, Herbert, W-5909 Burbach (DE)
(74) Vertreter: Hassler, Werner, Dr.

(56) Entgegenhaltungen:
- DD-A- 243 102
- DE-A- 1 949 192
- DE-A- 3 106 807
- US-A- 4 107 993
- ADVANCES IN INSTRUMENTATION, Bd. 44, 1989, Pittsburgh US, Seiten 1385-1396; H.G. WESTERLIND : 'Level gauging by radar'
- CLASSICAL ELECTRODYNAMICS, J.D. JACKSON, John Wiley & Sons, 1975, Seite 346

## Beschreibung

Die Erfindung betrifft ein Verfahren zur Messung der Füllstandes in Flaschen mittels elektromagnetischer Mikrowellen, wobei die Mitte des Flaschenhalses durch eine Meßschranke ermittelt und die Messung durch das Ausgangssignal der Meßschranke getriggert wird.

Die DE-A-3 106 807 beschreibt ein Verfahren, das mit Mikrowellen von etwa 24 GHz arbeitet. Die Wellenlänge dieser Mikrowellen liegt im Bereich der Wanddicke der Flaschen, so daß Störungen zu erwarten sind. Die Messungen sind auch deshalb unsicher, weil eine Erfassung der Mitte des Flaschenhalses nicht vorgesehen ist.

Die DD-A-243 102 beschreibt eine Reflexionsmessung mit Mikrowellen im Frequenzbereich von 1 bis 4 GHz. Die Wellenlängen bewegen sich in den Abmessungen des Meßfeldes des Flaschenhalses, so daß hierdurch Störungen zu erwarten sind.

Die US-A-4 107 993 beschreibt eine stationäre Füllstandmessung an Behältern. Der Füllstand wird in einem mit dem Behälter verbundenen Schauglas mit einem Durchmesser von ≈ 1 cm gemessen, das mit Mikrowellen einer Frequenz von ≈ 10 Ghz durchstrahlt wird.

Aufgabe der Erfindung ist die Bereitstellung eines Verfahrens, das einfach und sicher handhabbar ist und das in einem Frequenzbereich arbeitet, der nur geringe Störeinflüsse erwarten läßt.

Diese Aufgabe wird nach der Erfindung dadurch gelöst, daß nach dem Transmissionsprinzip gemessen wird, daß ein Mikrowellenbündel einer TE₁₀-Welle im Frequenzbereich zwischen 8 und 12 GHz eingesetzt wird und daß eine breitbandige Frequenzmodulation der Mikrowellenstrahlung angewandt wird.

Das Verfahren nach der Erfindung unterscheidet sich insofern vom Stand der Technik, als die verwendeten Mikrowellen eine hohe Transmissionsdämpfung für das Füllmittel der jeweiligen Flasche aufweisen, so daß der Füllstand mit hoher Sicherheit erfaßt werden kann. Die Däm pfung des jeweiligen Flaschenmaterials ist im wesentichen konstant, so daß eine hohe Meßsicherheit erzielt wird. Die Frequenz liegt in einem sehr günstigen Bereich, einerseits ist die Wellenlänge gegenüber den Abmessungen des Meßfeldes klein genug, und andererseits ist die Wellenlänge größer als die Wanddicke des Flaschenhalses. Die Mitte des Flaschenhalses wird sicher erfaßt. Durch die Frequenzmodulation lassen sich frequenzabhängige Effekte und Störeinflüsse, insbesondere durch Resonanzen weitgehend ausschalten.

Als besonders günstig hinsichtlich der Meßergebnisse hat es sich erwiesen, daß Mikrowellen im Frequenzbereich zwischen 10 und 12 GHz benutzt werden.

Eine Vorrichtung ist dadurch gekennzeichnet, daß ein Mikrowellengenerator auf eine Freuquenz zwischen 8 und 12 Ghz abgestimmt ist, daß eine breitbandige Frequenzmodulation der Mikrowellenstrahlung vorgesehen ist, daß ein von dem Mikrowellengenerator erregter, für den TE₁₀-Modus ausgelegter Sendehohlleiter einem Empfangshohlleiter gegenübersteht, daß Sender und Empfänger so angeordnet sind, daß Flaschen nach dem Transmissionsprinzip durchstrahlt werden können, daß eine Meßschranke geeignet ist, die Mitte des Flaschenhalses zu ermitteln und eine Triggerschaltung zu steuern, die das Ausgangssignal des Empfangshohlleiters triggert.

Die Mitte des Flaschenhalses läßt sich dadurch sicher erfassen, daß die Meßschranke zwei Lichtschranken umfaßt.

Die Flaschen lassen sich im Durchlauf sicher erfassen, daß zwischen dem Sendehohlleiter und dem Empfangshohlleiter eine Transportstrecke zum kontinuierlichen Transport der Flaschen angeordnet ist.

Ein Ausführungsbeispiel der Erfindung wird im Folgenden unter Bezugnahme auf die Zeichnungen erläutert, in denen darstellen:
Fig. 1 eine schematische Darstellung des Meßfeldes,
Fig. 2 eine Vorrichtung zur Messung des Flaschenfüllstandes,
Fig. 3 die Dämpfung in Abhängigkeit von der Frequenz,
Fig. 4 die Dämpfung in Abhängigkeit vom Füllstand und
Fig. 5 die Empfindlichkeit bei Veränderung des Füllstandes..

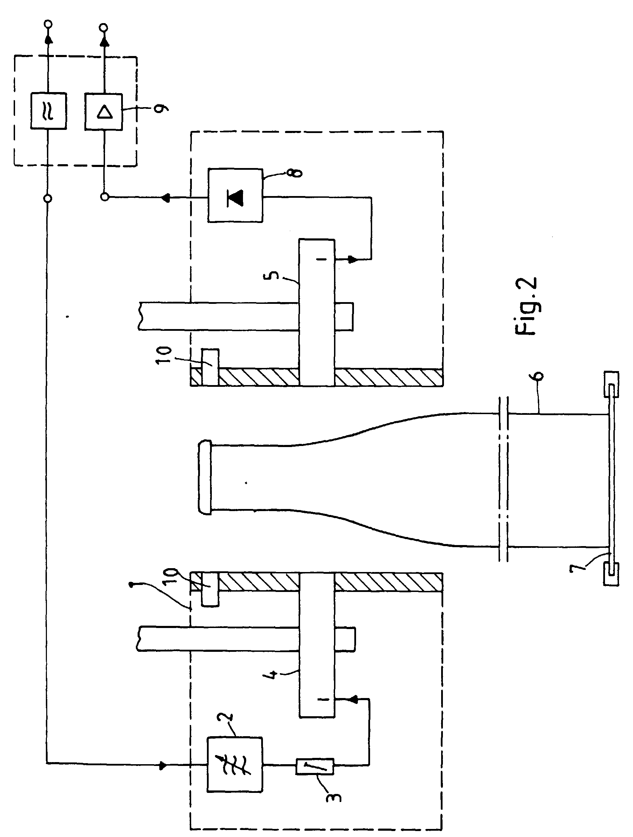

Nach Fig. 1 wird eine Mikrowelle in Form einer TE₁₀-Welle eines Hohlleiters in einen Flaschenhals eingestrahlt und durch einen entsprechenden Hohlleiter aufgefangen. Die Wellenlänge der Mikrowellen liegt zwischen 8 und 12, vorzugsweise zwischen 10 und 12 GHz. Bei diesen Frequenzen sind einnerseits die Meßfeldabmessungen groß gegenüber der Wellenlänge, und andererseits ist die Wellenlänge gegenüber der Wandstärke des Flaschenhalses noch so groß, daß Frequenzabhängigkeiten durch Reflexionsresonanzen und Oberflächenresonanzen am Flaschenhals vermieden werden. Man kann bei dieser Auslegung ohne Referenzstrecke arbeiten. Günstig ist eine Frequenzmodulation von 1 GHz, wodurch frequenzabhängige Effekte unterdrückt werden.

Einzelheiten der Meßvorrichtung zeigt Fig. 2. Die Vorrichtung nach der Erfindung umfaßt einen Sendeteil 1 mit einem Mikrowellengenerator 2, zum Beispiel einen abstimmbaren Gunn-Oszillator. Dieser Mikrowellengenerator 2 ist über ein reflexionsminderndes Dämpfungsglied 3 an einen Sendehohlleiter angekoppelt, der für den IE₁₀-Modus ausgelegt ist.

Der Sendehohlleiter 4 steht einem Empfangshohlleiter 5 gegenüber. Zwischen dem Sendehohlleiter 4 und dem Empfangshohlleiter 5 befindet sich die Meßstrecke, durch die Flaschen 6 auf einem Transportband 7 geführt werden. Das Transportband 7 transportiert die Flaschen 6 im Anschluß an eine Füllanlage durch die Meßstrecke.

Der Empfangshohlleiter 5 ist an einen Verstärker 8 angekoppelt. Das Ausgangssignal des Verstärkers 8 wird in einer Triggerschaltung 9 zur Auswertung getriggert. Die Triggerung erfolgt mittels einer Meßschranke 10, die aus zwei in Transportrichtung hintereinander angeordneten Lichtschranken aufgebaut sein kann. Die beiden Lichtschranken der Meßschranke 10 betätigen eine Kippstufe, die ein sicheres Erfassen der Mitte einer Flasche ermöglicht. Dort wird das Empfangssignal getriggert.

Die durchgeführten Messungen haben gezeigt, daß der Flaschenhals selbst eine Dämpfung bewirkt, die im wesentlichen als konstant angesehen werden kann. Reflexionen innerhalb der Meßstrecke und andere äußere Störungen lassen sich durch eine breitbandige Frequenzmodulation ausgleichen. Fig. 1 zeigt eine Messung für x = 0 also in der Mittelebene des Flaschenhalses und für x = ± 60 mm. Im Abstand von der Mittelebene zeigen sich Resonanzeffekte.

Die Transmissionsdämpfung durch den Flüssigkeitsinhalt hat sich als so groß erwiesen, daß auf einen Referenzzweig normalerweise verzichtet werden kann.

Das Meßfeld zwischen den beiden TE₁₀-Hohlleitern hat normalerweise einen Meßabstand von 60 oder 85 mm zwischen den Apparaturen in der Mittelebene und eine Querausdehnung in den Querrichtungen von 30 beziehungsweise 45 und 60 beziehungsweise 75 mm. Bei Transportgeschwindigkeiten von etwa 1 m/s ergeben sich so Meßzeiten von ca. 10 ms. Im Frequenzbereich von 8 bis 12 GHz, insbesondere 10 bis 12 GHz ergeben sich die günstigsten Verhältnisse. Die Frequenzabhängigkeit des Transmissionsfaktors ist in diesem Meßbereich gering. Die Transmissionsdämpfung durch das Füllmittel beträgt 10 bis 20 dB, so daß eine sichere Messung möglich ist.

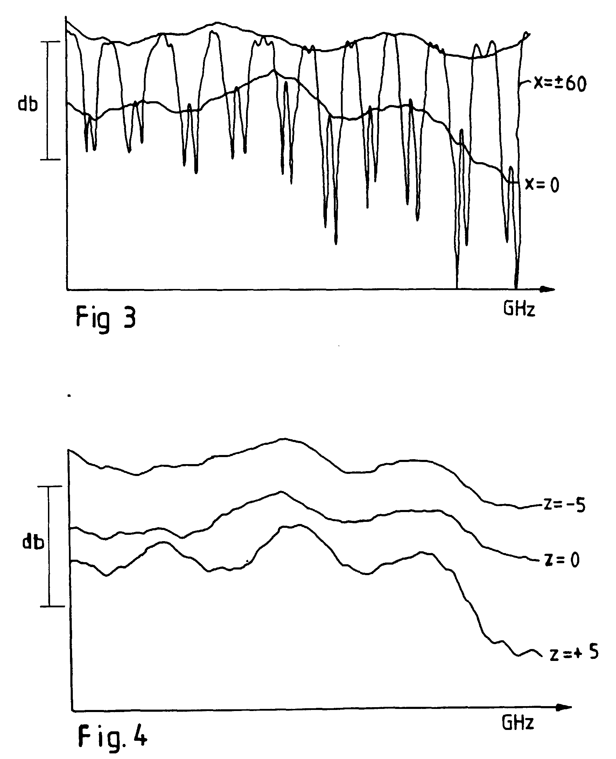

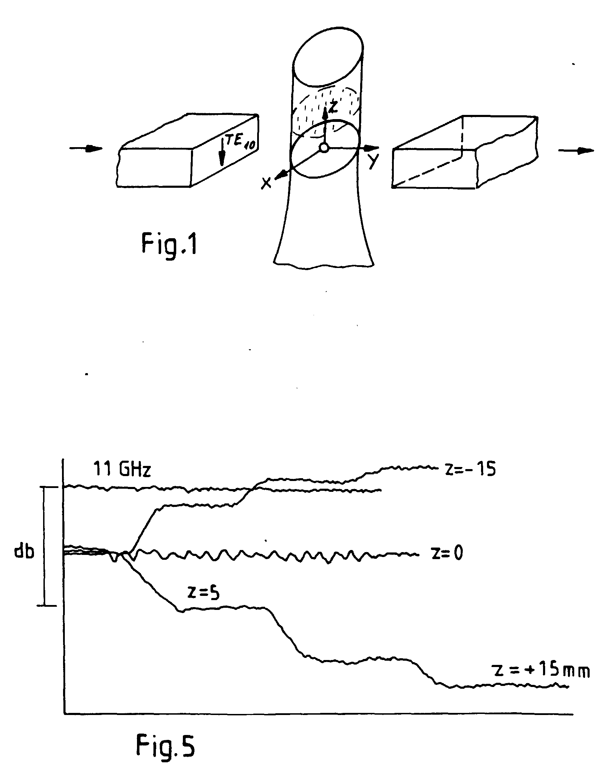

Fig. 4 zeigt Messungen in Abhängigkeit von dem Füllstand für Überfüllung und Unterfüllung. Man erkennt deutlich signifikante Unterschiede. Fig. 5 verdeutlicht nochmals diese Ergebnisse. Dort ist der Füllstand zeitabhängig verändert. Man erkennt wie der Meßwert genau der Änderung des Füllstandes folgt.

Die Erfindung ermöglicht eine Messung des Füllstandes mit einer Genauigkeit von 1 mm oder wenigen mm. Der Zustand der Meßstrecke, warme oder kalte Luft, trockene oder feuchte Luft, ergeben keine meßbaren Transmissionsänderungen. Die Langzeitstabilität der Messung erweist sich als sehr groß. Die Meßgenauigkeit kann in üblicher Weise durch Modullation erhöht werden.

## Patentansprüche

1. vertahren zur Messung des Füllstandes in Flaschen mittels elektromagnetischer Mikrowellen, wobei die Mitte des Flaschenhalses durch eine Meßschranke ermittelt und die Messung durch das Ausgangssignal der Meßschranke getriggert wird, dadurch gekennzeichnet, daß nach dem Transmissionsprinzip gemessen wird, daß ein Mikrowellenbündel einer TE₁₀-Welle im Frequenzbereich zwischen 8 und 12 GHz eingesetzt wird und daß eine breitbandige Frequenzmodulation der Mikrowellenstrahlung angewandt wird.

2. Vertahren nach Anspruch 1, gekennzeichnet durch eine Mikrowellenfrequenz zwischen 10 und 12 GHz.

3. Vorrichtung zur Durchführung des Verfahrens nach Anspruch 1 oder 2, dadurch gekennzeichnet, daß ein Mikrowellengenerator (2) auf eine Frequenz zwischen 8 und 12 GHz abgestimmt ist, daß eine breitbandige Frequenzmodulation der Mikrowellenstrahlung vorgesehen ist, daß ein von dem Mikrowellengenerator (2) erregter, für den TE₁₀-Modus ausgelegter Sendehohlleiter (4) einem Empfangshohlleiter (5) gegenübersteht, daß Sender und Empfänger so angeordnet sind, daß Laschen nach dem Transmissionsprinzip durchstrahlt werden können, daß eine Meßschranke geeignet ist, die Mitte des Flaschenhalses zu ermitteln und eine Triggerschaltung (9) zu steuern, die das Ausgangssignal des Empfangshohlleiters triggert.

4. Vorrichtung nach Anspruch 3, dadurch gekennzeichnet, daß die Meßschranke (10) zwei Lichtschranken umfaßt.

5. Vorrichtung nach Anspruch 3 oder 4, dadurch gekennzeichnet, daß zwischen dem Sendehohlleiter (4) und dem Empfangshohlleiter (5) eine Transportstrecke (7) zum kontinuierlichen Transport der Flaschen angeordnet ist.

## Claims

1. A method for measuring the filling level in bottles using electromagnetic microwaves, whereby the center line of the neck of the bottle is determined by a measuring barrier and the measurement is triggered by the output signal of the measuring barrier, characterized in that the irradiation method is used for the measurement, that a microwave bundle of a TE₁₀-wave having a frequency between 8 and 12 GHz is used and that a wideband frequency modulation of the microwave radiation is effected.

2. A method according to claim 1, characterized by a microwave frequency between 10 and 12 GHz.

3. A device for performing the method of claim 1 or 2, characterized in that a microwave generator (2) is tuned to a frequency between 8 and 12 GHz, that a wideband frequency modulation of the microwave radiation is provided, that a transmitting hollow waveguide (4) adapted to the TE₁₀-mode is directed opposing to a receiving hollow waveguide (5), that the transmitter and the receiver are arranged so that bottles are transmitted according to the irradiation method, that the measuring barrier is suitable to determine the center line of the neck of the bottle and to control a triggering circuit (9) which triggers the output signal of the receiving hollow waveguide.

4. A device according to claim 3, characterized in that the measuring barrier (10) comprises two light barriers.

5. A device according to claim 3 or 4, characterized in that a conveying line (7) for the continuous transport of the bottles is arranged between the transmitting hollow waveguide (4) and the receiving hollow waveguide (5).

## Revendications

1. Procédé de mesure du niveau de remplissage de bouteilles au moyen de micro-ondes électromagnétiques, dans lequel le milieu du col de bouteille est déterminé par une cellule de mesure et la mesure est déclenchée par le signal de sortie de la cellule de mesure, caractérisé en ce qu'on mesure conformément au principe de transmission, en ce qu'un faisceau de micro-ondes d'une onde TE₁₀ est mis en oeuvre dans la gamme de fréquences comprise entre 8 et 12 GHz et en ce qu'une modulation de fréquence à large bande est appliquée au rayonnement à micro-ondes.

2. Procédé suivant la revendication 1, caractérisé par une fréquence de micro-ondes comprise entre 10 et 12 GHz.

3. Dispositif pour la mise en oeuvre du procédé suivant l'une des revendications 1 et 2, caractérisé en ce qu'un générateur de micro-ondes (2) est accordé à une fréquence comprise entre 8 et 12 GHz, en ce qu'une modulation de fréquence à large bande du rayonnement à micro-ondes est prévue, en ce qu'un guide d'onde émetteur (4) excité par le générateur de micro-ondes (2) et conçu pour le mode TE₁₀ est situé en face d'un guide d'onde récepteur (5), en ce qu'émetteur et récepteur sont agencés de façon que des bouteilles puissent être traversées selon le principe de transmission, en ce qu'une cellule de mesure est appropriée pour déterminer le milieu du col de bouteille et commander un circuit de déclenchement (9) qui déclenche le signal de sortie du guide d'onde récepteur.

4. Dispositif suivant la revendication 3, caractérisé en ce que la cellule de mesure (10) comporte deux barrages photoélectriques.

5. Dispositif suivant l'une des revendications 3 et 4, caractérisé en ce qu'une ligne de transport (7) est agencée pour le transport continu des bouteilles entre le guide d'onde émetteur (4) et le guide d'onde récepteur (5).
